# EUROPÄISCHE PATENTSCHRIFT

(11) **EP 2 774 575 B1**
(45) Veröffentlichungstag und Bekanntmachung des Hinweises auf die Patenterteilung: **09.05.2018**
(21) Anmeldenummer: 14158397.1
(22) Anmeldetag: 07.03.2014
(51) Int. Cl.: A61C 3/025, B24C 5/02

(54) **ABRASIVSTRAHLVORRICHTUNG**
ABRASIVE BLASTING APPARATUS
DISPOSITIF À JET ABRASIF

(30) Priorität: 08.03.2013 DE 102013102334
(43) Veröffentlichungstag der Anmeldung: 10.09.2014
(73) Patentinhaber: Renfert GmbH, 78247 Hilzingen (DE)
(72) Erfinder: SCHEID, Maximilian, 78467 Konstanz (DE)
(74) Vertreter: Daub, Thomas

(56) Entgegenhaltungen:
- EP-A2- 1 468 659
- EP-B1- 0 299 541
- BE-A- 486 822
- DE-U1- 8 018 364
- JP-A- 2001 204 741
- US-A- 4 950 160

## Beschreibung

### Stand der Technik

Die Erfindung betrifft eine Abrasivstrahlvorrichtung nach dem Oberbegriff des Anspruchs 1.

Es ist bereits vorgeschlagen worden, Handstücke von Abrasivstrahlvorrichtungen mit rein mechanischen Absperrmitteln zum Absperren eines Abrasivstroms zu versehen.

Das Gebrauchsmuster DE 8018364 U offenbart eine Abrasivstrahlvorrichtung mit einem Handstück, einem Abrasivmitteltank, einer Abrasivstrahlleitung und einer Freigabeeinheit, die über eine pneumatische Fluidkrafteinheit wirkt. Die Freigabeeinheit ist nicht im Handstück angeordnet, sondern in der Nähe des Abrasivmitteltanks.

Die Aufgabe der Erfindung besteht insbesondere darin, eine gattungsgemäße Vorrichtung mit verbesserten Eigenschaften hinsichtlich einer einfachen und/oder komfortablen Bedienung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung betrifft eine Abrasivstrahlvorrichtung gemäß Anspruch 1. Bevorzugte Ausführungsformen sind in den abhängigen Ansprüchen definiert.

Es wird vorgeschlagen, dass die Freigabeeinheit zumindest eine pneumatische Fluidkrafteinheit aufweist, die dazu vorgesehen ist, in zumindest einem Betriebszustand, insbesondere einem Normal- bzw. Sperrzustand, mittels eines Steuerfluids eine Kraft zu erzeugen, die einen Aktivierungszustand der Freigabeeinheit festlegt, insbesondere das Abrasivfluid sperrt. Unter einer "Abrasivstrahlvorrichtung" soll insbesondere eine Vorrichtung zu einer Erzeugung und/oder Aussendung eines Abrasivstrahls verstanden werden. Unter einer "Dentaltechnikabrasivstrahlvorrichtung" soll insbesondere eine Abrasivstrahlvorrichtung verstanden werden, die dazu vorgesehen ist, bei einer Herstellung von Zahnersatz verwendet zu werden. Insbesondere ist die Dentaltechnikabrasivstrahlvorrichtung dazu vorgesehen, einen Abrasivstrahl mit einem Strahldurchmesser von maximal 3 mm, insbesondere maximal 2 mm, vorteilhaft maximal 1 mm, in einem Abstand von zumindest 2 cm, insbesondere zumindest 3 cm, vorteilhaft zumindest 5 cm, zu einem Handstück der Dentaltechnikabrasivstrahlvorrichtung zu erzeugen. Unter einem "Handstück" soll insbesondere eine Einheit verstanden werden, die dazu vorgesehen ist, von einem Bediener, vorzugsweise per Hand, zu einer Ausrichtung eines erzeugten Abrasivstrahls bewegt zu werden. Insbesondere ist das Handstück dazu vorgesehen, von einem Bediener zu einer Ausrichtung des Abrasivstrahls zumindest teilweise umgriffen zu werden. Insbesondere weist das Handstück zumindest eine Austrittsdüse auf, die dazu vorgesehen ist, das Abrasivfluid zu einem Abrasivstrahl zu formen. Insbesondere ist die Austrittsdüse von einem Hartmetall gebildet. Vorzugsweise ist die Austrittsdüse von einem kristallinen Material, insbesondere einem Kristall, insbesondere von Saphir, gebildet. Alternativ sind weitere, einem Fachmann als geeignet erscheinende Materialien, insbesondere mit hoher Abrassionsbeständigkeit, hoher Härte und/oder hoher Elastizität, zur Ausbildung der Austrittsdüse denkbar. Unter einem "Abrasivfluid" soll insbesondere eine Flüssigkeit, vorzugsweise ein Gas, verstanden werden, das vorteilhaft mit einem Abrasivmittel angereichert ist und/oder dieses mitführt. Unter einem "Abrasivmittel" soll insbesondere ein feinkörniges, insbesondere scharfkantiges, Material, insbesondere ein Pulver, verstanden werden, das vorteilhaft eine hohe Härte und/oder Zähigkeit aufweist. Insbesondere ist das Abrasivmittel von zumindest einem Korund, zumindest einem Kunststoff, Quarz, Glas, Siliziumcarbid, Bornitrid, Natriumhydrogencarbonat und/oder einem anderen, einem Fachmann als geeignet erscheinenden Stoff gebildet. Insbesondere weist das Abrasivmittel eine mittlere und/oder maximale Korngröße von maximal 1 mm, insbesondere maximal 0,3 mm, vorteilhaft maximal 0,1 mm, vorzugsweise maximal 0,03 mm, auf. Insbesondere ist die Abrasivstrahlleitung dazu vorgesehen, das Abrasivfluid von einem Abrasivfluideingang zu der Austrittsdüse zu führen. Insbesondere ist die Abrasivstrahlleitung von zumindest einem rohr- und/oder schlauchartigen Element gebildet. Vorzugsweise weist das Handstück zumindest eine Gehäuseeinheit auf, die die Abrasivstrahlleitung zumindest teilweise, insbesondere komplett, umgibt. Insbesondere ist der Abrasivfluidanschluss Teil der Abrasivstrahlleitung. Insbesondere ist der Abrasivfluidanschluss dazu vorgesehen, in einen Schlauchkörper einer Schlaucheinheit, die dazu vorgesehen ist, das Abrasivfluid zu dem Handstück zu leiten, eingesteckt zu werden. Insbesondere ist der Abrasivfluidanschluss komplett von der Gehäuseeinheit des Handstücks umgeben. Insbesondere bildet die Gehäuseeinheit einen Griffkörper aus. Vorzugsweise ist die Freigabeeinheit an einem Element, insbesondere an einem Mittelabschnitt des Elements, angeordnet. Alternativ ist es denkbar, dass die Freigabeeinheit an einem Ende der Abrasivstrahlleitung und/oder zwischen Elementen der Abrasivstrahlleitung angeordnet ist. Insbesondere weist die pneumatische Fluidkrafteinheit zumindest zwei, in zumindest einem Betriebszustand gegeneinander wirkende, Krafterzeugungseinheiten auf. Alternativ ist es denkbar, dass die pneumatische Fluidkrafteinheit eine einzelne Krafterzeugungseinheit aufweist, die dazu vorgesehen ist, in Abhängigkeit von einem Betriebszustand, insbesondere in Abhängigkeit von einer Stromrichtung und/oder in Abhängigkeit von einer Ventilstellung, Kräfte in unterschiedlichen Richtungen zu erzeugen. Insbesondere ist die Freigabeeinheit dazu vorgesehen, in einem Normalzustand, insbesondere bei anliegendem Steuerstrom, das Abrasivfluid zu sperren. Insbesondere ist die Freigabeeinheit dazu vorgesehen, das Abrasivfluid zumindest bei einer Bedienerbetätigung freizugeben. Unter einem "Steuerstrom" soll insbesondere ein Fluidstrom und/oder ein elektrischer Strom verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Es kann insbesondere eine einfache und/oder komfortable Bedienung erreicht werden, da eine Bedienkraft zur Betätigung der Freigabeeinheit zumindest im Wesentlichen entfallen kann, da diese durch die pneumatische Fluidkrafteinheit erzeugt wird.

Weiterhin wird vorgeschlagen, dass eine Stromkrafteinheit als Fluidkrafteinheit, nämlich als pneumatische Fluidkrafteinheit, ausgebildet ist, die dazu vorgesehen ist, in dem Betriebszustand mittels eines Steuerfluids eine Kraft zu erzeugen, die einen Aktivierungszustand der Freigabeeinheit festlegt. Unter einer "Fluidkrafteinheit" soll insbesondere eine Stromkrafteinheit verstanden werden, die als Steuerstrom ein Steuerfluid, insbesondere eine Flüssigkeit, beispielsweise Wasser, vorteilhaft destilliertes Wasser, vorzugsweise ein Gas, insbesondere Luft, alternativ Stickstoff oder eine andere, vorzugsweise reaktionsarme, Gasmischung, verwendet, wobei das Steuerfluid einen gegenüber Normaldruck erhöhten Druck aufweist. Vorzugsweise weist die Fluidkrafteinheit zumindest einen Kolben und/oder zumindest ein Schaufelrad auf. Es kann insbesondere eine einfache und/oder effiziente Krafterzeugung erreicht werden. Alternativ sind Ausgestaltungen denkbar, in denen die Stromkrafteinheit von einer elektrischen Einheit, die insbesondere zumindest einen Elektromagneten aufweist, gebildet ist und mittels eines elektrischen Steuerstroms aktiviert wird, wobei die Stromkrafteinheit vorteilhaft dazu vorgesehen ist, bei aktivem Steuerstrom einer das Abrasivfluid sperrenden Kraft, die insbesondere durch eine Federeinheit erzeugt wird, entgegenzuwirken.

Ferner wird vorgeschlagen, dass die Freigabeeinheit zumindest eine Entspannungseinheit aufweist, die dazu vorgesehen ist, in Abhängigkeit von einer Bedienerbetätigung, insbesondere zu einer Aktivierung des Abrasivstrahls, ein in der pneumatischen Fluidkrafteinheit gespeichertes Fluid abzulassen. Insbesondere weist die Entspannungseinheit zumindest ein Ventil, insbesondere ein Rückschlagventil, alternativ ein 4/2 Wegeventil, auf. Insbesondere weist die Entspannungseinheit zumindest ein Betätigungselement auf, das dazu vorgesehen ist, einen Zustand der Entspannungseinheit, insbesondere einen Schaltzustand des Ventils anzupassen. Es kann insbesondere eine einfache Steuerung erreicht werden.

Weiterhin wird vorgeschlagen, dass die Freigabeeinheit dazu vorgesehen ist, mit einem Steuerfluid betrieben zu werden, dessen Eingangsdruck geringer ist als ein Eingangsdruck des Abrasivfluids. Unter einem "Eingangsdruck" des Steuerfluids bzw. des Abrasivfluids soll insbesondere ein Druck verstanden werden, der zumindest in einem Zustand, in dem ein Fluidfluss innerhalb des Handstücks unterbrochen ist, an einem Steuerfluidanschluss bzw. dem Abrasivfluidanschluss anliegt. Insbesondere weist eine Krafterzeugungseinheit der pneumatischen Fluidkrafteinheit eine Krafterzeugungsfläche, insbesondere eine Kolbenfläche, auf, die größer ist als eine Querschnittsfläche der Abrasivstrahlleitung. Es kann insbesondere eine technisch einfache Lösung erreicht werden. Insbesondere kann eine geringe Auslösekraft und/oder ein geringer Auslöseweg für ein Bedienelement der Entspannungseinheit erreicht werden. Insbesondere kann eine geringe Störung durch abgelassenes Steuerfluid erreicht werden. Alternativ ist es denkbar, dass die Freigabeeinheit dazu vorgesehen ist, mit einem Steuerfluid betrieben zu werden, dessen Eingangsdruck größer ist als und/oder zumindest im Wesentlichen gleich groß ist wie ein Eingangsdruck des Abrasivfluids.

Vorteilhaft weist die Entspannungseinheit zumindest eine Auslassdüse auf, die dazu vorgesehen ist, das Steuerfluid gerichtet, insbesondere zumindest im Wesentlichen parallel zu einer Auslassrichtung des Abrasivstrahls, zumindest teilweise abzulassen. Insbesondere ist die Auslassdüse dazu vorgesehen, den Abrasivstrahl mit dem Steuerfluid zu ummanteln. Alternativ ist es denkbar, dass die Auslassdüse dazu vorgesehen ist, einen Freiblasstrahl zu erzeugen, der insbesondere dazu vorgesehen ist, ein bearbeitetes Werkstück, insbesondere einen Zahnersatz von abgelagertem Abrasivmittel und/oder anderen Ablagerungen zu befreien. Insbesondere ist es denkbar, dass die Freigabeeinheit zumindest eine, vorzugsweise mechanische und/oder manuell aktivierbare, Blockiereinheit aufweist, die dazu vorgesehen ist, das Abrasivfluid unabhängig von einer Bedienerbetätigung abzusperren. Es kann insbesondere ein erhöhter Bedienkomfort erreicht werden. Insbesondere kann durch ein gerichtetes Ablassen des, insbesondere flüssigen, Steuerfluids ein Abtransport und/oder eine Bindung von Abrasivmittel und/oder abgetragenem Material erreicht werden, was insbesondere im Fall einer zahnärztlichen, insbesondere intraoralen Anwendung, vorteilhaft sein kann. Weiterhin kann ein kühlender Effekt erzielt werden.

Weiterhin wird vorgeschlagen, dass das Handstück zumindest ein Betätigungselement aufweist, das dazu vorgesehen ist, einen Aktivierungszustand der pneumatischen Fluidkrafteinheit zu ändern. Insbesondere ist das Betätigungselement an einer Position, insbesondere einer Oberseite, des Handstücks angeordnet, die von einer Symmetrieebene zumindest einer Gehäuseeinheit des Handstücks geschnitten wird, um insbesondere eine Verwendung sowohl für Links- als auch für Rechtshänder zu erleichtern und/oder zu ermöglichen. Alternativ ist es insbesondere denkbar, dass das Handstück zwei Betätigungselemente zur Betätigung der pneumatischen Fluidkrafteinheit aufweist, die symmetrisch bezüglich der Symmetrieebene angeordnet sind. Vorteilhaft ist das Betätigungselement dazu vorgesehen, direkt einen Schaltzustand eines Ventils der Entspannungseinheit und/oder der Freigabeeinheit zu beeinflussen. Insbesondere weist das Betätigungselement eine Betätigungsstrecke von maximal 2 mm, insbesondere maximal 1 mm, vorzugsweise maximal 0,5 mm auf. Insbesondere ist das Betätigungselement als Taster ausgebildet. Alternativ und/oder zusätzlich ist das Betätigungselement dazu vorgesehen, einen elektrischen Schaltkreis, insbesondere der Freigabeeinheit zu schließen, alternativ zu öffnen. Insbesondere weist das Handstück ein Betätigungselement auf, das dazu vorgesehen ist, eine Beleuchtungseinheit zu aktivieren und/oder zu deaktivieren.

Insbesondere ist das Betätigungselement zur Aktivierung der Beleuchtungseinheit einstückig mit dem Betätigungselement zur Aktivierung der pneumatischen Fluidkrafteinheit ausgebildet. Es kann insbesondere eine sehr schnelle und/oder zumindest im Wesentlichen verzögerungsfreie Aktivierung und/oder Deaktivierung des Abrasivstrahls erreicht werden. Insbesondere kann eine bauteilsparende Ausgestaltung erreicht werden, da insbesondere auf einen Kanalwahlschalter und/oder einen Fußschalter zur Freigabe und/oder Aktivierung des Abrasivstrahls verzichtet werden kann.

Vorteilhaft ist die Freigabeeinheit als Quetschventil ausgebildet. Insbesondere ist die Abrasivstrahlleitung zumindest teilweise als flexibler Schlauch, insbesondere von einem Polymer und/oder einem Gummi, ausgebildet. Insbesondere ist die pneumatische Fluidkrafteinheit dazu vorgesehen, die Abrasivstrahlleitung an zumindest einer Stelle zusammenzudrücken, um einen Strom des Abrasivfluids zu unterbrechen. Es kann insbesondere eine hohe Haltbarkeit erreicht werden. Insbesondere kann ein Verstauben und/oder Blockieren der Freigabeeinheit zumindest im Wesentlichen vermieden werden. Alternativ sind Ausgestaltungen mit zumindest einem Abriegelelement denkbar, das insbesondere zwischen zwei rohr- und/oder schlauchartigen Elementen der Abrasivstrahlleitung angeordnet ist.

Ferner wird vorgeschlagen, dass die Abrasivstrahlvorrichtung eine Schlaucheinheit aufweist, die einen Schlauchkörper aufweist, der dazu vorgesehen ist, sowohl das Abrasivfluid als auch das Steuerfluid zu führen. Insbesondere weist der Schlauchkörper zumindest zwei Fluidleitkanäle auf, die insbesondere zumindest im Wesentlichen parallel verlaufen. Insbesondere verläuft eine Leitung des Steuerfluids außerhalb eines Fluidkanals des Abrasivfluids und/oder verläuft in einer Spiralform an einer Außen- und/oder Innenseite des Fluidkanals des Abrasivfluids, um insbesondere eine hohe mechanische Flexibilität der Schlaucheinheit zu erreichen. Es kann insbesondere eine einfache Handhabung und/oder eine übersichtliche Arbeitsumgebung erreicht werden. Alternativ ist es denkbar, dass die Schlaucheinheit einen ersten Schlauch aufweist, der innerhalb eines zweiten Schlauchs verläuft. Insbesondere bildet der erste Schlauch einen Fluidkanal des Abrasivfluids. Insbesondere weist der erste Schlauch eine höhere Wandstärke auf als der zweite Schlauch, wodurch insbesondere eine hohe Haltbarkeit und/oder eine hohe mechanische Flexibilität erreicht werden kann. Weiterhin ist es denkbar, dass ein Fluidkanal des Steuerfluids koaxial zum Fluidkanal des Abrasivfluids geführt ist.

Weiterhin wird vorgeschlagen, dass die Abrasivstrahlvorrichtung zumindest einen Auflagekörper aufweist, der dazu vorgesehen ist, in einem Nahbereich des Handstücks, insbesondere in einem Abstand von maximal 4 cm, insbesondere maximal 2 cm, vorteilhaft maximal 1 cm, beabstandet, insbesondere in einem Abstand von zumindest 1 mm, vorteilhaft zumindest 3 mm, vorzugsweise zumindest 6 mm, zum Handstück zumindest einen Schlauchkörper einer Schlaucheinheit zu verstärken. Insbesondere ist der Auflagekörper dazu vorgesehen, die Schlaucheinheit gegenüber einer Hand des Bedieners abzustützen. Insbesondere ist der Auflagekörper dazu vorgesehen, bei einem Betrieb zumindest teilweise auf einem Handrücken der Hand des Bedieners, vorzugsweise zwischen Daumenansatz und Zeigefingeransatz aufzuliegen. Insbesondere weist der Auflagekörper einen Außendurchmesser von zumindest 2 cm, insbesondere zumindest 2,5 cm, vorteilhaft zumindest 3 cm, und/oder maximal 4,5 cm, insbesondere maximal 4 cm, vorteilhaft maximal 3, 5 cm, auf. Insbesondere weist der Auflagekörper eine zumindest im Wesentlichen runde, insbesondere kreisrunde, Querschnittsform, alternativ eine ovale, insbesondere zumindest im Wesentlichen eiförmige, Querschnittsform, auf. Vorzugsweise weist der Auflagekörper eine einem Fachmann als geeignet erscheinende ergonomisch, insbesondere an einen Handrücken, angepasste Form auf. Insbesondere weist der Auflagekörper zumindest ein Loch auf, in dem die Schlaucheinheit, insbesondere zumindest ein Schlauchkörper der Schlaucheinheit, vorteilhaft jeder der Schlauchkörper der Schlaucheinheit, zumindest teilweise geführt ist. Insbesondere umfasst, vorzugsweise umschließt, der Auflagekörper die Schlaucheinheit bezüglich ihres Querschnitts zumindest im Wesentlichen, insbesondere komplett. Unter "umschließen" soll insbesondere zumindest im Wesentlichen abstandsfrei umfassen verstanden werden. Insbesondere ist der Auflagekörper zu einer Positionsverstellung vorgesehen, wodurch insbesondere ein Komfort eines Bedieners vergrößert werden kann. Insbesondere weist der Auflagekörper eine Feststelleinheit auf, die dazu vorgesehen ist, eine Position des Auflagekörpers zu fixieren. Es kann insbesondere eine hohe mechanische Flexibilität, eine geringe Baugröße des Handstücks und/oder eine einfache, sichere, stabile, und/oder komfortable Führbarkeit des Handstücks erreicht werden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Fig. 1: eine erfindungsgemäße Abrasivstrahlvorrichtung,
- Fig. 2: eine Außenansicht der erfindungsgemäßen Abrasivstrahlvorrichtung mit einem erfindungsgemäßen Handstück,
- Fig. 3: eine Schnittdarstellung des Handstücks aus Figur 1 entlang einer Symmetrieebene des Handstücks und
- Fig. 4: eine Schnittdarstellung eines alternativen erfindungsgemäßen Handstücks.

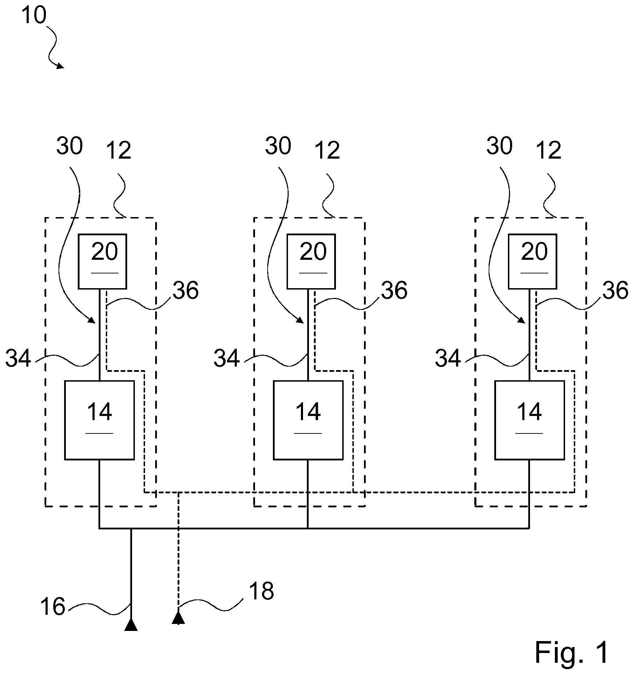

Figur 1 zeigt eine als Dentaltechnikabrasivstrahlvorrichtung ausgebildete Abrasivstrahlvorrichtung 10. Die Abrasivstrahlvorrichtung 10 weist mehrere, beispielsweise drei, vier, fünf oder auch mehr, Abrasivstrahlmodule 12 auf. Jedes der Abrasivstrahlmodule 12 weist einen Abrasivmitteltank 14 auf. Die Abrasivmitteltanks 14 weisen jeweils eine Mischeinheit auf und sind dazu vorgesehen, ein Fluid mit unterschiedlichen Abrasivmitteln, beispielsweise Abrasivmittel mit unterschiedlichen Korngrößen und/oder von unterschiedlichen Materialien, zu mischen und/oder anzureichern und somit Abrasivfluide zu erzeugen. Die Abrasivstrahlmodule 12 sind an eine gemeinsame, als Druckluftversorgung ausgebildete, Druckversorgung 16 angeschlossen, die das Fluid bereitstellt. Die Druckversorgung 16 weist eine Stelleinheit auf, die es einem Bediener ermöglicht, einen Fluiddruck der Druckversorgung 16 in einem Bereich zwischen 0,5 und 6 Bar Überdruck einzustellen. Die Abrasivstrahlmodule 12 weisen jeweils ein Handstück 20 zur Formung eines Abrasivstrahls auf. Weiterhin weisen die Abrasivstrahlmodule 12 jeweils eine Schlaucheinheit 30 auf, die dazu vorgesehen ist, das Abrasivfluid zu dem Handstück 20 zu transportieren. Jedes der Abrasivstrahlmodule 12 weist ein separates, vorzugsweise zwischen Druckversorgung 16 und Abrasivmitteltank 14 angeordnetes, manuelles Notabsperrventil auf, das dazu vorgesehen ist, im Fall eines Defekts des Abrasivstrahlmoduls 12, insbesondere des Handstücks 20, eine Fluidzufuhr zu unterbrechen, um einen Betrieb mit den verbliebenen Abrasivstrahlmodulen 12 fortzusetzen (nicht dargestellt). Die Handstücke 20 sind in einer Betriebskammer angeordnet.

Weiterhin ist es denkbar, dass jedes der Abrasivstrahlmodule 12 eine separate Stelleinheit zur Wahl eines Fluiddruckes aufweist. Ferner ist eine erfindungsgemäße Abrasivstrahlvorrichtung mit lediglich einem einzelnen Abrasivstrahlmodul denkbar, wobei auf separate Notabsperrventile verzichtet werden kann.

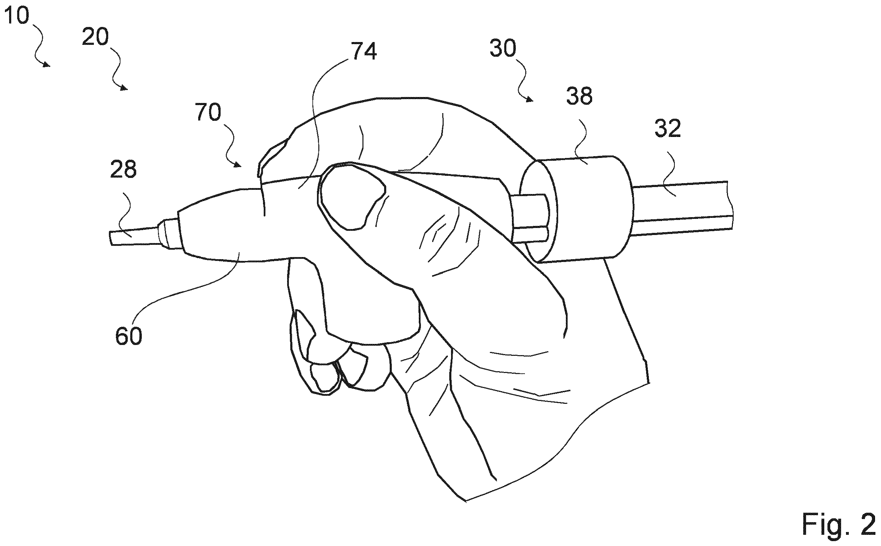

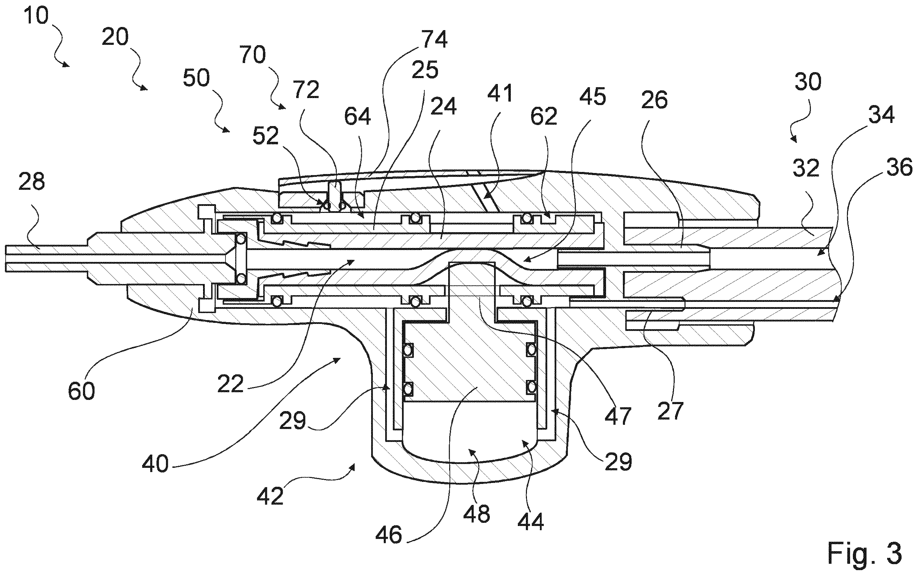

Figur 2 und 3 zeigen das Handstück 20, das eine Abrasivstrahlleitung 22 zur Führung eines Abrasivfluids und eine als Quetschventil ausgebildete Freigabeeinheit 40 aufweist, die an der Abrasivstrahlleitung 22 angeordnet ist und zu einer Freigabe des Abrasivfluids vorgesehen ist. Die Abrasivstrahlleitung 22 dient einer Leitung des Abrasivfluids von einem Abrasivfluidanschluss 26 zu einer Austrittsdüse 28 des Handstücks 20. Die Austrittsdüse 28 ist von einem Hartmetall gebildet. Die Austrittsdüse 28 weist mittig einen Kanal mit einem Durchmesser von 1 mm auf. Die Austrittsdüse 28 weist eine Länge von 4,5 cm auf, wobei davon 2 cm innerhalb einer Gehäuseeinheit 60 des Handstücks 20 angeordnet sind. Die Abrasivstrahlleitung 22 weist ein schlauchartiges Element 24 auf. Das schlauchartige Element 24 weist einen Innendurchmesser von 4 mm und eine Wandstärke von 2 mm auf, wobei alternative Innendurchmesser zwischen 3 mm und 6 mm und alternative Wandstärken denkbar sind. Das schlauchartige Element 24 ist im Wesentlichen von einem Gummi gebildet. Das schlauchartige Element 24 ist an seinen Enden mechanisch durch stoffschlüssig verbundene Verstärkungselemente, die von einem von Gummi abweichenden Material, insbesondere Metall und/oder Kunststoff gebildet sind, verstärkt. Ein erstes Ende des schlauchartigen Elements 24 ist auf eine Röhre des Abrasivfluidanschlusses 26 aufgesteckt. Der Abrasivfluidanschluss 26 ist von einer Ausformung der Gehäuseeinheit 60 gebildet. Ein zweites Ende des schlauchartigen Elements 24 umgreift ein inneres Ende der Austrittsdüse 28. Zwischen dem zweiten Ende und der Austrittsdüse 28 ist hierbei ein Dichtring angeordnet. Die Abrasivstrahlvorrichtung 10 weist ein Set von Austrittsdüsen mit unterschiedlichen Durchmessern im Bereich zwischen 0,4 mm und 2 mm und/oder unterschiedlichen Formen von rund bis breitgeschlitzt auf, gegen die die Austrittsdüse 28 modular ausgetauscht werden kann.

Eine breitgeschlitzte Austrittsdüse weist beispielsweise eine Lochgröße von 1,5 mm x 3,5 mm auf.

Die Freigabeeinheit 40 weist eine als pneumatische Fluidkrafteinheit ausgebildete Stromkrafteinheit 42 auf, die dazu vorgesehen ist, in einem Normalzustand mittels eines Steuerfluids eine Kraft zu erzeugen, die einen Sperrzustand der Freigabeeinheit 40 festlegt. Die Abrasivstrahlvorrichtung 10 weist eine weitere Druckversorgung 18 auf, die dazu vorgesehen ist, das Steuerfluid bereitzustellen. Die Schlaucheinheiten 30 sind jeweils dazu vorgesehen, das Steuerfluid, das beispielsweise einen Druck von 1 Bar Überdruck aufweist, von der weiteren Druckversorgung 18 zu dem Handstück 20 zu leiten. Die Freigabeeinheit 40 wird demnach in zumindest einigen Betriebsmodi mit einem Steuerfluid betrieben, dessen Eingangsdruck geringer ist als ein Eingangsdruck des Abrasivfluids. Die Stromkrafteinheit 42 weist eine erste Krafterzeugungseinheit 44 auf, die von einem Kolben 46 gebildet ist, der, angetrieben durch das Steuerfluid, ein Druckelement 47 seitlich an einer Quetschstelle auf das schlauchartige Element 24 einwirkt, um dieses zusammenzupressen. Die Quetschstelle befindet sich nahe einer Mitte des schlauchartigen Elements 24. Das Druckelement 47 weist eine Druckfläche auf, die ein Vielfaches größer, beispielsweise neunmal größer, ist als eine Druckfläche des Kolbens 46. Die erste Krafterzeugungseinheit 44 ist in einer Ausbeulung einer Unterseite der Gehäuseeinheit 60 angeordnet, die von einem Bediener als Griffhilfe genutzt werden kann. Alternativ sind weitere Zwischenelemente denkbar, die zu einer Kraftübertragung vorgesehen und zwischen dem Druckelement und dem Kolben angeordnet sind.

Das Handstück 20 weist eine Stabilisierungsröhre 25 auf, die das schlauchartige Element 24 umfangsmäßig umschließt, um eine Ausdehnung des schlauchartigen Elements 24 durch Druck des Abrasivfluids zu vermeiden und/oder zu verringern. Die Stabilisierungsröhre 25 weist an der Quetschstelle eine Ausnehmung auf, durch die das Druckelement 47 geführt ist. Die Stabilisierungsröhre 25 bildet eine Gegendruckfläche, gegen die das Druckelement 47 das schlauchartige Element 24 zusammendrückt. Die Stabilisierungsröhre 25 ist von einem Kunststoff gebildet. Alternativ sind Ausgestaltungen der Stabilisierungsröhre aus Metall und/oder Gewebe denkbar.

Der Kolben 46 weist eine Hubrichtung auf, die senkrecht zu einer Fluidstrahlrichtung innerhalb der Fluidstrahlleitung orientiert ist. Alternativ ist es denkbar, dass der Kolben in einem von einem rechten Winkel abweichenden Winkel auf die Abrasivstrahlleitung wirkt.

Weiterhin ist eine Ausgestaltung denkbar, in der der Kolben eine Hubrichtung parallel zu der Fluidstrahlrichtung innerhalb der Fluidstrahlleitung aufweist, wobei zwischen dem Kolben und der Fluidstrahlleitung Kraftumlenkelemente, insbesondere schiefe Ebenen, angeordnet sind.

Die Stromkrafteinheit 42 weist eine zweite Krafterzeugungseinheit 45 auf, die dazu vorgesehen ist, bei sinkender und/oder fehlender Kraft der ersten Krafterzeugungseinheit 44 eine Kraft zu erzeugen, die einen Sperrzustand der Abrasivstrahlleitung 22 aufhebt. Die zweite Krafterzeugungseinheit 44 ist von dem schlauchartigen Element 24 der Abrasivstrahlleitung 22 gebildet, der die Kraft durch eine Eigenspannung erzeugt. Weiterhin ist das Abrasivfluid dazu vorgesehen, bei Wegfall der durch die erste Krafterzeugungseinheit 44 erzeugten Kraft das schlauchartige Element 24 an der Quetschstelle auszudehnen und den Kolben 46 beiseite zu drücken. In weiteren Ausgestaltungen ist es denkbar, dass die zweite Krafterzeugungseinheit zumindest ein weiteres Federelement, insbesondere eine Spiralfeder aufweist, die dazu vorgesehen ist, eine zusätzliche Kraft zu erzeugen.

Das Handstück 20 weist einen Steuerfluidanschluss 27 auf. Weiterhin weist das Handstück 20 Steuerfluidleitungen 29 auf, die den Steuerfluidanschluss 27 fluidisch mit einer Druckkammer 48 des Kolbens 46 der Stromkrafteinheit 42 verbinden. Die Steuerfluidleitungen 29 sind teilweise von kanalartigen Ausformungen der Gehäuseeinheit 60 gebildet. Die Steuerfluidleitungen 29 sind teilweise von Zwischenräumen 62, 64 zwischen der Gehäuseeinheit 60 und der Stabilisierungsröhre 25 gebildet. Die Zwischenräume 62, 64 entstehen durch Dichtringe, die um die Stabilisierungsröhre 25 herum zwischen der Stabilisierungsröhre 25 und der Gehäuseeinheit 60 angeordnet sind. Alternativ sind Ausgestaltungen denkbar, wobei die Steuerfluidleitungen lediglich von durch die Gehäuseeinheit gebildeten Kanälen gebildet sind.

Die Freigabeeinheit 40 weist eine Entspannungseinheit 50 auf, die dazu vorgesehen ist, in Abhängigkeit von einer Bedienerbetätigung ein in der Druckkammer 48 der Stromkrafteinheit 42 gespeichertes Fluid, das Druck auf den Kolben 46 ausübt, teilweise abzulassen. Das Handstück 20 weist eine Betätigungseinheit 70 auf, die dazu vorgesehen ist, einen Aktivierungszustand der Stromkrafteinheit 42 zu ändern. Die Betätigungseinheit 70 weist ein als Tastelement ausgebildetes Betätigungselement 72 auf. Die Entspannungseinheit 50 weist ein als Rückschlagventil ausgebildetes Ventil 52 auf, das durch das Steuerfluid in einen selbstsperrenden Zustand gedrückt ist. Das Ventil 52 ist fluidisch über die Steuerfluidleitungen 29 mit dem Steuerfluidanschluss 27 verbunden. Das Ventil 52 ist in einer Wand des Zwischenraums 64 angeordnet. Das Ventil 52 verbindet in offenem, also betätigtem, Zustand die Steuerfluidleitungen 29 mit einem das Handstück 20 umgebenden Raum. Das Betätigungselement 72 ist von einem Stift gebildet, der ein als Dichtring ausgebildetes Schließelement des Ventils 52 trägt. Das Betätigungselement 72 ist in der Gehäuseeinheit 60 geführt. Um einen Verschluss des Ventils 52 sicherzustellen, kann eine zusätzliche Feder vorgesehen sein, die das Ventil 52 in eine Schließstellung bewegt, jedoch eine nötige Betätigungskraft zur Aufhebung der Schließstellung erhöht. Die Betätigungseinheit 70 weist eine, von einem weichen Kunststoff, vorzugsweise einem Elastomer, gebildete, Abdeckfolie 74 auf, die an ihren Seiten und an ihrem hinteren, den Fluidanschlüssen zuweisenden, Ende formschlüssig mit der Gehäuseeinheit 60 verbunden ist. Die Abdeckfolie 74 bedeckt das Betätigungselement 72. Das Betätigungselement 72 ist durch Deplatzierung und Verformung der Abdeckfolie 74 betätigbar. Bei Betätigung austretendes Steuerfluid verlässt das Handstück 20 an einem vorderen Ende der Abdeckfolie 74, an dem diese nicht mit der Gehäuseeinheit 60 verbunden ist. Das Betätigungselement 72 ist an einer der ersten Krafterzeugungseinheit 44 gegenüberliegenden Seite - einer Oberseite - des Handstücks 20 angeordnet. Das Handstück 20 ist derart ausgeformt und das Betätigungselement 72 derart angeordnet, dass dieses bevorzugt durch einen Zeigefinger zu bedienen ist. Alternativ sind Ausgestaltungen denkbar nach denen das Betätigungselement an der die erste Krafterzeugungseinheit aufnehmende Ausformung der Gehäuseeinheit angeordnet ist und dazu vorgesehen ist, pistolenartig bedient zu werden.

Durch Betätigung der Betätigungseinheit 70 wird ein Druck der Druckkammer 48 abgesenkt, da das Steuerfluid durch das Ventil 52 nach außen entweicht. Dadurch wird der Kolben 46 durch Eigenspannung des schlauchartigen Elements 24 und durch den Druck des Abrasivfluids nach außen gedrückt. Das Abrasivfluid strömt nun durch die Abrasivstrahlleitung 22 und durch die Austrittsdüse 28 und bildet einen Abrasivstrahl. Bei einem Lösen der Betätigung blockiert das Ventil 52 und ein Druck steigt in der Druckkammer 48 rasch an, drückt den Kolben 46 nach oben und somit das Druckelement 47 gegen das schlauchartige Element 24, wodurch ein schnelles Absperren des Abrasivfluidstroms erreicht wird.

Die Schlaucheinheit 30 weist einen Schlauchkörper 32 auf, der dazu vorgesehen ist, sowohl das Abrasivfluid als auch den Steuerstrom, also das Steuerfluid, zu führen. Der Schlauchkörper 32 bildet zwei Fluidleitkanäle 34, 36 aus. Ein erster der Fluidleitkanäle 34 dient dazu, in einem Abrasivmitteltank generierte Abrasivfluid zu dem Handstück 20 zu führen. Ein zweiter der Fluidleitkanäle 36 dient dazu, das Steuerfluid zu dem Handstück 20 zu führen. Der zweite Fluidleitkanal 36 ist parallel zu dem ersten Fluidleitkanal 34 geführt. Die Fluidleitkanäle 34, 36 sind übereinander seitlich versetzt in dem Schlauchkörper 32 angeordnet. Der Abrasivfluidanschluss 26 und der Steuerfluidanschluss 27 sind jeweils als Hohlzylinderstopfen ausgebildet. Die Fluidleitkanäle 34 ,36 des Schlauchkörpers 32 sind über den jeweiligen Fluidanschluss übergestülpt. Der erste Fluidleitkanal 34 weist einen größeren Querschnitt auf als der zweite Fluidleitkanal 36, weist also einen größeren Durchmesser auf.

Weiterhin weist die Abrasivstrahlvorrichtung 10 einen Auflagekörper 38 auf, der dazu vorgesehen ist, in einem Nahbereich des Handstücks 20 um 1 cm bis 2 cm beabstandet zum Handstück 20 den Schlauchkörper 32 der Schlaucheinheit 30 zu verstärken. Der Auflagekörper 38 ist zylinderartig ausgebildet. Der Auflagekörper 38 weist einen Durchmesser von 3,5 cm und eine Länge von 2,5 cm auf. Weiterhin weist das Handstück 20 eine Warneinheit 41 auf, die dazu vorgesehen ist, bei einem Defekt der Abrasivstrahlleitung 22 einen Warnton abzugeben. Die Warneinheit 41 ist dazu vorgesehen, einen Leckstrom des Abrasivfluids zur Generierung des Warntons, beispielsweise eines Pfeiftons, auszunutzen. Die Warneinheit 41 weist einen Schlitz in der Stabilisierungsröhre 25 auf, der in einen Zwischenraum zwischen der Stabilisierungsröhre 25 und der Gehäuseeinheit 60 mündet, der von Dichtringen der Zwischenräumen 62, 64 der Steuerfluidleitungen 29 gebildet ist. Dieser Zwischenraum mündet in ein Loch in der Gehäuseeinheit 60, das einen Pfeifenkörper ausbildet. Weiterhin ist in der Abdeckfolie 74 ein Loch zum Ablassen des freiwerdenden Abrasivfluids angeordnet.

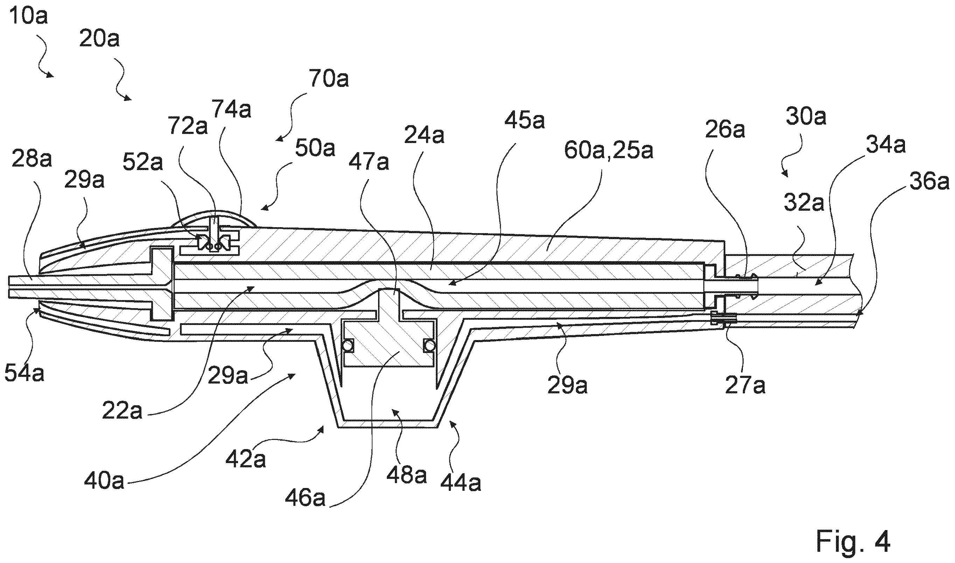

In Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a an die Bezugszeichen des Ausführungsbeispiels in der Figur 4 angefügt.

Figur 4 zeigt eine weitere Abrasivstrahlvorrichtung 10a mit einem Handstück 20a, das eine Abrasivstrahlleitung 22a zur Führung eines Abrasivfluids und eine Freigabeeinheit 40a aufweist, die an der Abrasivstrahlleitung 22a angeordnet ist und zu einer Freigabe des Abrasivfluids vorgesehen ist. Die Freigabeeinheit 40a weist eine als Fluidkrafteinheit ausgebildete Stromkrafteinheit 42a auf, die dazu vorgesehen ist, in einem Sperrzustand mittels eines Steuerfluids eine Kraft zu erzeugen, die einen Aktivierungszustand der Freigabeeinheit 40a festlegt. Die Freigabeeinheit 40a weist eine Entspannungseinheit 50a auf, die dazu vorgesehen ist, in Abhängigkeit von einer Bedienerbetätigung ein in der Stromkrafteinheit 42a gespeichertes Fluid abzulassen. Die Entspannungseinheit 50a weist ein Ventil 52a auf, das dazu vorgesehen ist, durch die Bedienerbetätigung ausgelöst zu werden. Die Entspannungseinheit 50a weist eine Auslassdüse 54a auf, die dazu vorgesehen ist, das Steuerfluid, das bei offenem Ventil 52a, also bei Betätigung, entweicht, gerichtet abzulassen. Die Auslassdüse 52a ist ringförmig ausgebildet. Die Auslassdüse 54a ist dazu vorgesehen, eine den Abrasivstrahl einhüllende Strömung zu schaffen. Aufgrund eines reduzierten Gefälles einer Strömungsgeschwindigkeit des Abrasivstrahls in radialer Richtung, also senkrecht zur Ausbreitungsrichtung, kann so, insbesondere aufgrund reduzierter Verwirbelung, eine geringe Aufweitung des Abrasivstrahls erreicht werden. Das Handstück 20a weist Steuerfluidleitungen 29a auf, die das Steuerfluid von einem durch ein Betätigungselement 72a betätigten Ventil 52a zu der Auslassdüse 54a führen. Eine das Betätigungselement 72a bedeckende Abdeckfolie 74a ist rund herum stoffschlüssig mit der Gehäuseeinheit verbunden. Eine die Abrasivstrahlleitung 22a nach außen stützende Stabilisierungsröhre 25a ist von einer Gehäuseeinheit 60a des Handstücks 20a gebildet.

### Bezugszeichen

- 10: Abrasivstrahlvorrichtung
- 12: Abrasivstrahlmodul
- 14: Abrasivmitteltank
- 16: Druckversorgung
- 18: Druckversorgung
- 20: Handstück
- 22: Abrasivstrahlleitung
- 24: schlauchartiges Element
- 25: Stabilisierungsröhre
- 26: Abrasivfluidanschluss
- 27: Steuerfluidanschluss
- 28: Austrittsdüse
- 29: Steuerfluidleitung
- 30: Schlaucheinheit
- 32: Schlauchkörper
- 34: Fluidleitkanal
- 36: Fluidleitkanal
- 38: Auflagekörper
- 40: Freigabeeinheit
- 41: Warneinheit
- 42: Stromkrafteinheit
- 44: Krafterzeugungseinheit
- 45: Krafterzeugungseinheit
- 46: Kolben
- 47: Druckelement
- 48: Druckkammer
- 50: Entspannungseinheit
- 52: Ventil
- 54: Auslassdüse
- 60: Gehäuseeinheit
- 62: Zwischenraum
- 64: Zwischenraum
- 70: Betätigungseinheit
- 72: Betätigungselement
- 74: Abdeckfolie

## Patentansprüche

1. Abrasivstrahlvorrichtung, insbesondere Dentaltechnikabrasivstrahlvorrichtung, aufweisend zumindest ein Handstück (20), das zumindest eine Abrasivstrahlleitung (22) zur Führung eines Abrasivfluids und zumindest eine Freigabeeinheit (40) aufweist, die an der Abrasivstrahlleitung (22) angeordnet ist und zu einer Freigabe des Abrasivfluids vorgesehen ist, wobei die Freigabeeinheit (40) zumindest eine pneumatische Fluidkrafteinheit aufweist, die dazu vorgesehen ist, in zumindest einem Betriebszustand mittels eines Steuerfluids eine Kraft zu erzeugen, die einen Aktivierungszustand der Freigabeeinheit (40) festlegt, wobei in dem Aktivierungszustand das Abrasivfluid durch die pneumatische Fluidkrafteinheit gesperrt ist.

2. Abrasivstrahlvorrichtung nach Anspruch 1, **dadurch gekennzeichnet, dass** die Freigabeeinheit (40) zumindest eine Entspannungseinheit (50) aufweist, die dazu vorgesehen ist, in Abhängigkeit von einer Bedienerbetätigung ein in der pneumatischen Fluidkrafteinheit gespeichertes Fluid abzulassen.

3. Abrasivstrahlvorrichtung zumindest nach Anspruch 1, **dadurch gekennzeichnet, dass** die Freigabeeinheit (40) dazu vorgesehen ist, mit einem Steuerfluid betrieben zu werden, dessen Eingangsdruck geringer ist als ein Eingangsdruck des Abrasivfluids.

4. Abrasivstrahlvorrichtung zumindest nach Anspruch 2, **dadurch gekennzeichnet, dass** die Entspannungseinheit (50) zumindest eine Auslassdüse aufweist, die dazu vorgesehen ist, das Steuerfluid gerichtet abzulassen.

5. Abrasivstrahlvorrichtung nach einem der vorhergehenden Ansprüche, **dadurch gekennzeichnet, dass** das Handstück (20) zumindest eine Betätigungseinheit (70) aufweist, die dazu vorgesehen ist, einen Aktivierungszustand der pneumatischen Fluidkrafteinheit zu ändern.

6. Abrasivstrahlvorrichtung nach einem der vorhergehenden Ansprüche, **dadurch gekennzeichnet, dass** die Freigabeeinheit (40) als Quetschventil ausgebildet ist.

7. Abrasivstrahlvorrichtung nach einem der vorhergehenden Ansprüche, **gekennzeichnet durch** eine Schlaucheinheit (30), die einen Schlauchkörper (32) aufweist, der dazu vorgesehen ist, sowohl das Abrasivfluid als auch das Steuerfluid zu führen.

8. Abrasivstrahlvorrichtung nach einem der vorhergehenden Ansprüche, **gekennzeichnet durch** zumindest einen Auflagekörper (38), der dazu vorgesehen ist, in einem Nahbereich des Handstücks (20) beabstandet zum Handstück (20) zumindest einen Schlauchkörper (32) einer Schlaucheinheit (30) zu verstärken.

## Claims

1. Abrasive blasting apparatus, in particular dental abrasive blasting apparatus, with at least one hand piece (20) comprising at least one abrasive jet duct (22) for conveying an abrasive fluid and at least one release unit (40), which is arranged on the abrasive jet duct (22) and is configured for releasing the abrasive fluid, wherein the release unit (40) comprises at least one pneumatic fluid force unit, which is configured to generate, in at least one operating state, a force defining an activation state of the release unit (40), wherein in the activation state the abrasive fluid is blocked by the pneumatic fluid force unit.

2. Abrasive blasting apparatus according to claim 1, **characterised in that** the release unit (40) comprises at least one de-tensioning unit (50), which is configured to discharge a fluid stored in the pneumatic fluid force unit depending on an actuation by an operator.

3. Abrasive blasting apparatus at least according to claim 1, **characterised in that** the release unit (40) is configured to be operated with a control fluid, the inlet pressure of which is smaller than an inlet pressure of the abrasive fluid.

4. Abrasive blasting apparatus at least according to claim 2, **characterised in that** the de-tensioning unit (50) comprises at least one outlet nozzle, which is configured to discharge the control fluid in a directed manner.

5. Abrasive blasting apparatus according to one of the preceding claims, **characterised in that** the hand piece (20) comprises at least one actuation unit (70), which is configured for changing an activation state of the pneumatic fluid force unit.

6. Abrasive blasting apparatus according to one of the preceding claims, **characterised in that** the release unit (40) is embodied as a pinch valve.

7. Abrasive blasting apparatus according to one of the preceding claims, **characterised by** a hose unit (30) comprising a hose body (32) which is configured to convey both the abrasive fluid and the control fluid.

8. Abrasive blasting apparatus according to one of the preceding claims, **characterised by** at least one lying-upon body (38), which is configured to reinforce at least one hose body (32) of a hose unit (30) in a proximity of the hand piece (20) and spaced apart from the hand piece (20).

## Revendications

1. Dispositif à jet abrasif, en particulier dispositif à jet abrasif dentaire, comprenant au moins une pièce à main (20), laquelle comporte au moins un conduit de faisceau abrasif (22) pour guider un fluide abrasif et comporte au moins une unité de relâchement (40), laquelle est située sur le conduit de faisceau abrasif (22) et est destinée pour un relâchement du fluide abrasif, l'unité de relâchement (40) comprenant au moins une unité pneumatique de force-fluide, laquelle est prévue pour générer, dans au moins un état de fonctionnement et par le biais d'un fluide de commande, une force qui détermine un état d'activation de l'unité de relâchement (40), le fluide abrasif étant dans l'état d'activation bloqué par l'unité pneumatique de force-fluide.

2. Dispositif à jet abrasif selon la revendication 1, **caractérisé en ce que** l'unité de relâchement (40) comprend au moins une unité de détente (50) prévue pour décharger le fluide stocké dans l'unité pneumatique de force-fluide en fonction d'une actuation par un opérateur.

3. Dispositif à jet abrasif au moins selon la revendication 1, **caractérisé en ce que** l'unité de relâchement (40) est conçue pour être opérée avec un fluide de commande, dont la pression d'entrée est moindre qu'une pression d'entrée du fluide abrasif.

4. Dispositif à jet abrasif au moins selon la revendication 2, **caractérisé en ce que** l'unité de détente (50) comprend au moins une buse à décharge prévue à diriger et décharger le fluide de commande.

5. Dispositif à jet abrasif selon l'une quelconque des revendications précédentes, **caractérisé en ce que** la pièce à main (20) comprend au moins une unité d'actionnement (70) prévue pour changer un état d'activation de l'unité pneumatique de force-fluide.

6. Dispositif à jet abrasif selon l'une quelconque des revendications précédentes, **caractérisé en ce que** l'unité de relâchement (40) est réalisée en tant que vanne à pincement.

7. Dispositif à jet abrasif selon l'une quelconque des revendications précédentes, **caractérisé par** une unité de tuyau (30) comprenant un corps de tuyau (32) prévu pour guider le fluide abrasif et le fluide de commande.

8. Dispositif à jet abrasif selon l'une quelconque des revendications précédentes, **caractérisé par** au moins un corps appuyant (38) prévu pour renforcer au moins un corps de tuyau (32) d'une unité de tuyau (30), dans une proximité de la pièce à main (20), de façon spatialement séparée de la pièce à main (20).
